# EUROPÄISCHE PATENTANMELDUNG

(11) **EP 2 937 610 A1**
(43) Veröffentlichungstag der Anmeldung: **28.10.2015**
(21) Anmeldenummer: 15161885.7
(22) Anmeldetag: 31.03.2015
(51) Int. Cl.: F16L 3/01

(54) **STRANGARTIGE LEITUNGSFÜHRUNGSEINRICHTUNG, INSBESONDERE FÜR KAPILLARRÖHRCHEN ODER DERGLEICHEN**

(30) Priorität: 01.04.2014 DE 202014101546 U
(71) Anmelder: Igus GmbH, 51147 Köln (DE)
(72) Erfinder: Jaeker, Thilo-Alexander, 53757 Sankt Augustin (DE)
(74) Vertreter: Lippert, Stachow & Partner

(57) **Zusammenfassung**

Eine Leitungsführungseinrichtung (10) zum geschützten Führen mindestens einer Leitung, insbesondere eines Kapillarröhrchens, ist in Längsabschnitten oder vollständig einstückig und vorzugsweise aus Kunststoff hergestellt. Sie hat ein erstes Anschlusselement (15) für einen Anschlusspunkt, ein zweites Anschlusselement (16) für den anderen Anschlusspunkt und eine Aufnahme (35) für die mindestens eine Leitung.

Erfindungsgemäß hat die Leitungsführungseinrichtung ein Querschnittsprofil (30) mit einem ersten Bereich (31), welcher einen Trägersteg (33) zum Tragen von Gewichtslast bildet, und mit einem zweiten Bereich (32), welcher eine Verbreiterung (34) gegenüber dem ersten Bereich bildet. Ferner hat die Leitungsführungseinrichtung (10) mindestens ein erstes vorgekrümmtes Bogenstück (11, 12), welches eine vorgegebene Krümmung um eine Krümmungsachse (A) aufweist, und mindestens ein daran anschließendes, tordierbares Linearstück (14).

Auch die Verwendung der Leitungsführungseinrichtung zum Schutz einer Leitung mit Kapillarröhrchen und die entsprechende Anordnung werden beschrieben.

## Beschreibung

### TECHNISCHES GEBIET

Die Erfindung betrifft allgemein eine Leitungsführungseinrichtung zum geschützten Führen mindestens einer Leitung, insbesondere eines Kapillarröhrchens, zwischen einem festen und einem beweglichen Anschlusspunkt.

### STAND DER TECHNIK

Ein sehr verbreitetes Beispiel einer Leitungsführungseinrichtung ist die sogenannte Energieführungskette. Diese besteht aus einzelnen Gliedern, welche meist aus Einzelteilen zusammengesetzt sind. Die Patente DE3531066C2, EP0803032B1 bzw. EP1381792B1 der Anmelderin beschreiben solche Energieführungsketten mit Gliedern aus zwei, vier bzw. sechs Einzelteilen. Solche Ketten haben sich sehr bewährt. Sie sind robust und zuverlässig, jedoch relativ aufwendig in der Herstellung.

Die vorliegende Erfindung betrifft keine Kette aus einzelnen Gliedern, sondern eine Leitungsführungseinrichtung gemäß dem Oberbegriff aus Anspruch 1. Bei dieser eher strangartig ausgeführten Leitungsführungseinrichtung ist zumindest ein Längsabschnitt die gesamte Leitungsführungseinrichtung aus einem Stück hergestellt.

Teilweise oder vollständig einstückig hergestellte Leitungsführungseinrichtungen sind ebenfalls bereits bekannt, beispielsweise aus der Patentanmeldung DE102005004453A1 oder aus dem Patent EP1138555B1. Solche weitgehend einstückig herstellbaren Leitungsführungseinrichtungen sind insbesondere für Anwendungen mit großen Stückzahlen und relativ kurzer Führungslänge geeignet, z.B. zur Versorgung von Kfz-Sitzen.

Eine strangartige, d.h. eine vollständig oder über die Länge abschnittsweise einstückig hergestellte, Leitungsführung ist aus der WO 2005/040659 A1 vorbekannt. Diese Leitungsführungseinrichtung zum geschützten Führen mindestens einer Leitung, wie zum Beispiel eines Kabels, eines Schlauchs oder dergleichen, wird vorliegend als nächstliegender Stand der Technik betrachtet, da sie insbesondere für kleinere Längen und Leitungsdurchmesser ausgelegt ist. Diese Leitungsführungseinrichtung verläuft zwischen einem feststehenden Anschlusspunkt und einem hierzu relativbeweglichen Anschlusspunkt und ist hierbei zumindest abschnittsweise in ihren Längsabschnitten oder vollständig einstückig als Kunststoffteil hergestellt. Sie umfasst ein erstes und zweites Anschlussende für jeden Anschlusspunkt und eine Aufnahme für die mindestens eine Leitung. Hierbei sind einzelne Glieder als im Wesentlichen starre U-Profile einstückig geformt, wobei ein Deckelelement an einer Seitenwand angeformt und in eine das Glied verschließende und eine die Aufnahme freigebende Stellung überführbar ist. Dadurch, dass die Glieder des einstückigen Strangs als im Wesentlichen starre U-Profile hergestellt werden, weist diese Leitungsführungseinrichtung auch bei vergleichsweise kleinen Gliedern eine hohe Stabilität auf.

Eine strangartige Leitungsführung gemäß WO 2005/040659 A1 lässt sich zwar kostengünstiger herstellen als typische Energieführungsketten. Sie hat dennoch, unter anderem bedingt durch das Prinzip einzelner Glieder mit U-Profil, deren Gelenkverbindung untereinander aus einem Filmscharnier, und auch aufgrund der aufklappbaren Deckelelemente, weiterhin einen recht komplexen Aufbau.

### AUFGABENSTELLUNG

Eine Aufgabe der vorliegenden Erfindung ist es mithin, eine Leitungsführungseinrichtung vorzuschlagen, welche einen besonders einfachen Aufbau, insbesondere mit sehr geringem Eigengewicht, aufweist und/oder sehr wenig Bauraum benötigt. Es soll insbesondere auch eine Leitungsführungseinrichtung zum Schutz eines Kapillarröhrchens geeignet ist.

### ALLGEMEINE BESCHREIBUNG DER ERFINDUNG

Erfindungsgemäß wird diese Aufgabe dadurch gelöst, dass die Leitungsführungseinrichtung ein verhältnismäßig einfach gestaltetes Querschnittsprofil aufweist mit einem ersten Bereich, welcher einen Trägersteg zum Tragen von Gewichtslast bildet, und einem zweiten Bereich, welcher eine Verbreiterung gegenüber dem ersten Bereich bildet. Ferner hat die Leitungsführungseinrichtung erfindungsgemäß mindestens ein erstes vorgekrümmtes Bogenstück, welches eine vorgegebene Krümmung um eine Krümmungsachse aufweist, und mindestens ein daran anschließendes gerades Linearstück, welches in sich bzw. um seine eigene Längsachse tordierbar ist, insbesondere bei übermäßigem Stauchen des Bogenstücks bezüglich der Krümmungsachse. Übermäßig bedeutet hierbei insbesondere ein Stauchen des Bogenstücks, so dass der zulässige Mindestradius zum Schutz der geführten Leitung(en) gegen Abknicken unterschritten würde.

Die Erfindung weicht damit vom Grundprinzip typischer Energieführungsketten ab, bei welchen relativbeweglich zusammenwirkende Anschläge einen minimalen Krümmungsradius in einem Umlenkbogen sicherstellen. Bei der hier vorgeschlagenen Leitungsführungseinrichtung sind solche Anschläge grundsätzlich nicht erforderlich. Im Bereich bestimmungsgemäßer Belastungen, erfolgt erfindungsgemäß bei Überschreiten einer gewissen Biegebeanspruchung des Bogenstücks ein Verdrehen bzw. eine Torsion des anschließenden Linearstücks. Diese Torsion wiederum ermöglicht bzw. führt zu einem Aufbäumen bzw. Ausbrechen des Bogenstücks in einer Richtung etwa parallel zu dessen Krümmungsachse, so dass dieses Bogenstück einen gewissen Mindestradius erhalten kann ohne weiter zusammengestaucht zu werden.

Die vorgegebene Krümmung des Bogenstücks, d.h. die Vorkrümmung des Bogenstücks im unbelasteten Zustand, und dessen Material sind so gewählt, dass die Reaktionskraft im Linearstück zu einem Verdrehen bzw. zur erfindungsgemäßen Torsion, insbesondere im Linearstück, führt. Entsprechend ist auch der Profilquerschnitt im Zusammenspiel mit Material und Vorkrümmung gewählt. Insbesondere aus diesem Grund ist die zumindest eine Verdickung vorgesehen, welche bei Krümmung zu einem Übergang von maximaler Zugbeanspruchung außen bis zu maximaler Druckbeanspruchung innen am Bogen führt.

Ohne die Erfindung an eine bestimmte Theorie binden zu wollen, wird vermutet, dass die hierdurch erzeugte Torsion, welche das übermäßige Zusammenbiegen der Bogenstücke vermeidet bzw. das Ausbrechen des Bogenstücks entlang der Krümmungsachse bewirkt, auf eine Kräfteverteilung zurückzuführen ist, ähnlich der Kräfteverteilung die zu einem Versagensmodus führt, welcher als sog. "Biegedrillknicken" (Engl. "lateral torsional buckling") aus dem Gebiet der Stahlträger-Statik bekannt ist. Die Erfindung verhindert im Bereich bestimmungsgemäßer Belastungen jedoch zuverlässig ein Abknicken und nutzt die ansonsten unerwünschte Torsion vielmehr aus zum Auffangen von übermäßiger Beanspruchung.

Durch die Ausnutzung dieses Effektes erübrigen sich grundsätzlich besondere Anschläge zur unteren Begrenzung des Umlenkradius, was die Bauweise der Leitungsführungseinrichtung erheblich vereinfacht bzw. das Eigengewicht und den erforderlichen Bauraum reduziert.

In bevorzugter Ausführung wird ein zweites vorgekrümmtes Bogenstück vorgesehen, welches ebenfalls eine vorgegebene Krümmung um eine Krümmungsachse aufweist, wobei die Krümmungsrichtungen des ersten und zweiten Bogenstücks entgegengesetzt sind. Hierbei wird das mindestens eine Linearstück zwischen den Bogenstücken angeordnet, und einen Verlauf ähnlich einem S-Kurvenverlauf aufweist. So kann der Torsionseffekt verstärkt werden und die Biegebeanspruchung in den einzelnen Bogenstücken aufgrund der Relativbewegung der Anschlusselemente annähernd halbiert werden. Die vorgegebene Krümmung in beiden Bogenstücken ist zu diesem Zweck vorzugsweise gleich stark, d.h. mit identischem Krümmungsradius gewählt.

Zur weitergehenden baulichen Vereinfachung ist es vorteilhaft, wenn der zweite Bereich die Aufnahme für die Leitung(en) bildet, besonders bevorzugt mit einer Gestaltung in der Art einer Rohr-Schnappschelle. Es ist hierbei oder auch bei anderer Befestigungsart günstig, eine Öffnung zum Einlegen der mindestens einen Leitung vorzusehen, welche vorzugsweise dem Trägersteg gegenüberliegt. Grundsätzlich könnten die Aufnahme vollumfänglich geschlossen sein, dabei müsste die Leitung jedoch von den Stirnenden her durchgeführt bzw. eingefädelt werden, was aufwendig ist und einen späteren Austausch erheblich erschwert.

Wenn der zweite Bereich des Profilquerschnitts nebst der Verbreiterung zu Kraftverteilungszwecken auch die Aufnahme der Leitung(en) ausbildet, ist es vorteilhaft, wenn die Verbreiterung des zweiten Bereichs einen einstückigen Übergang zwischen dem ersten Bereich und der Aufnahme bildet. Vorzugsweise hat die Verbreiterung hierbei eine Querschnittsbreite mit einer größeren Abmessung, als die maximale Querschnittsbreite des ersten Bereichs bzw. des Trägerstegs. Die Querschnittsbreite des ersten Bereichs bzw. des Trägerstegs kann, ausgenommen unwesentliche Teile wie z.B. einer möglichen Abrundung an einem Endbereich, zweckmäßig annähernd konstant sein, oder aber z.B. zur Materialeinsparung innerhalb des zweiten Bereichs variieren.

In bevorzugter Ausführung wird die Leitungsführungseinrichtung so angeordnet, dass die Krümmungsachse des mindestens einen Bogenstücks im Wesentlichen parallel zur Haupterstreckung des Trägerstegs verläuft, insbesondere im Wesentlichen vertikal.

In bevorzugter Ausführungsform hat die Leitungsführungseinrichtung ein T-ähnliches oder Y-ähnliches Querschnittsprofil. Hierbei kann der Flansch bzw. Gurt, d.h. der Bereich des Querschnittsprofil welcher in etwa senkrecht zum Trägersteg steht, vorzugsweise die Aufnahme für genau eine Leitung bilden. Der Flansch kann hierbei z.B. eine C-ähnliche Form mit nach oben gerichteter Öffnung aufweisen.

Um die Übertragung von Torsionsbelastung zwischen Leitungsführungseinrichtung und der darin geführten Leitung zu minimieren, ist es vorteilhaft, wenn die Aufnahme einen kreisrunden Querschnitt aufweist und die Leitung bzgl. Torsion mit Radialspiel aufnimmt, so dass die Leitung in der Aufnahme frei ist gegenüber dieser zu drehen bzw. nicht oder nur teilweise mit dieser zu drehen.

Die vorgeschlagene Leitungsführungseinrichtung ist besonders geeignet zum Führen einer einzigen Leitung und/oder einer Leitung mit relativ kleinem Durchmesser. Dementsprechend beträgt der Durchmesser der Aufnahme vorzugsweise insbesondere deutlich weniger als 20mm, ist vorzugsweise kleiner als 10mm.

In der Praxis bewährt hat sich ein Profilquerschnitt, bei welchem die Maximalbreite des ersten Bereichs kleiner ist, als der Aufnahmedurchmesser. Die Maximalbreite des ersten Bereichs liegt vorzugsweise betragsmäßig im Bereich von 10% bis 60% des Aufnahmedurchmessers. Hierdurch kann eine besonders einfache und materialsparende Bauweise der strangartigen Leitungsführungseinrichtung erzielt werden.

In vorteilhafter Ausführungsform ist jedes Bogenstück in unbelastetem Zustand mit einem Bogenmaß grösser als bei einem 180°-Bogen, d.h. einem Bogenmaß >180°, insbesondere ≥ 200°, ausgeführt. So kann u.a. hinsichtlich Aufspreizen der Bogenstücke zusätzliche Flexibilität erreicht werden.

In einer praxisgerechten Ausführungsform, insbesondere für Analysegeräte, ist vorgesehen, dass die Krümmungsachse jedes Bogenstücks etwa vertikal verläuft und der relativbewegliche Anschlusspunkt in einer etwa horizontalen Ebene gegenüber dem festen Anschlusspunkt verfahrbar ist. Es liegt hingegen auch im Rahmen der Erfindung wenn der relativbewegliche Anschlusspunkt zusätzlich oder alternativ vertikal verfahrbar ist und/oder die Krümmungsachse jedes Bogenstücks etwa horizontal verläuft.

Um für das Aufbäumen bzw. Ausbrechen des mindestens einen Bogenstücks Freiraum zu schaffen, sieht eine bevorzugte Ausführungsform an jedes Anschlusselement anschließend jeweils ein vorgekrümmtes Brückenstück vor, wobei die Brückenstücke mit einer Krümmungsachse senkrecht zur Haupterstreckung des Trägerstegs angeordnet sind. Die Krümmungsachse der Brückenstücke kann im Einklang mit der weiter oben erläuterten Ausführung insbesondere etwa horizontal liegen.

Die Leitungsführungseinrichtung kann vollständig aus einem Stück gefertigt sein, z.B. als durchgehendes Kunststoffteil im Spritzgussverfahren, oder nach einem Baukasten-Prinzip modular und anwendungsspezifisch zusammengesetzt werden. In modularer Bauweise ist es vorteilhaft, wenn die Leitungsführungseinrichtung aus einzelnen, einstückig hergestellten Bogenstücken und Linearstücken zusammengesetzt ist, welche mittels Verbindungsstücken kraft- und/oder formschlüssig, insbesondere torsionsübertragend, verbunden sind zu einer durchgehenden Leitungsführungseinrichtung.

Das Material ist, zumindest bei den Linearstücken, bevorzugt hinreichend torsionselastisch gewählt, dass ein Knicken, insbesondere eine sogenanntes Biegedrillknicken, auch bei geringer Überschreitung der maximalen Nennbeanspruchung, zu vermeiden. Die maximale Nennbeanspruchung kann z.B. erreicht sein, wenn der relativbewegliche Anschlusspunkt auf Mindestabstand zum feststehenden Anschlusspunkt gefahren ist.

Die vorgeschlagene Leitungsführungseinrichtung eignest sich insbesondere zum Schutz genau einer Leitung mit Kapillarröhrchen, insbesondere in einem Analysegerät, wie z.B. einem Pipettierautomaten bzw. Dosierautomaten in der medizinischen oder chemischen Analysetechnik, oder z.B. zum Schutz genau einer Glasfaserleitung, insbesondere in einer Maschine mit Datenverarbeitung. Dementsprechend betrifft die Erfindung auch genau eine Anordnung aus der erfindungsgemäßen Leitungsführungseinrichtung und genau einer Leitung mit Kapillarröhrchen oder genau einer Glasfaserleitung bzw. Lichtwellenleiter, welche von der Leitungsführungseinrichtung geführt und geschützt und hierzu in dieser aufgenommen ist.

### KURZBESCHREIBUNG DER FIGUREN

Weitere Einzelheiten, Vorteile und Merkmale der Erfindung lassen sich dem nachfolgenden Teil der Beschreibung entnehmen, in welchem zwei Ausführungsbeispiele anhand der beigefügten Zeichnungen näher erläutert werden. Hierbei zeigen
- FIG.1: eine Perspektivansicht eines ersten Ausführungsbeispiels einer strangartigen Leitungsführungseinrichtung, welche durchgehend einstückig hergestellt ist;
- FIG.2: eine Perspektivansicht eines zweiten Ausführungsbeispiels einer strangartigen Leitungsführungseinrichtung, welche abschnittsweise einstückig hergestellt ist;
- FIG.3: ein Querschnittsprofil gemäß der Schnittlinie III-III in FIG.1 bzw. FIG.2;
- FIG.4-7: einstückig hergestellte Einzelteile eines modularen Systems zum Herstellen einer Leitungsführungseinrichtung gemäß FIG.2 in Perspektivansicht (FIG.4-5 und FIG.7) bzw. im Querschnitt (FIG.6);
- FIG.8A-8D: einen Prototypen nach FIG.1 in Momentaufnahmen eines Bewegungsablaufs zur Veranschaulichung des erfindungsgemäßen Torsionseffektes in einem Linearstück bei übermäßigem Stauchen der Kurvenstücke in Seitenansicht auf Schwarz/Weiss-invertierten Fotografien; und
- FIG.9A-9D: Draufsichten der Momentaufnahmen des Bewegungsablaufs entsprechend FIG.8A-8D.

### BESCHREIBUNG DER AUSFÜHRUNGSBEISPIELE ANHAND DER FIGUREN

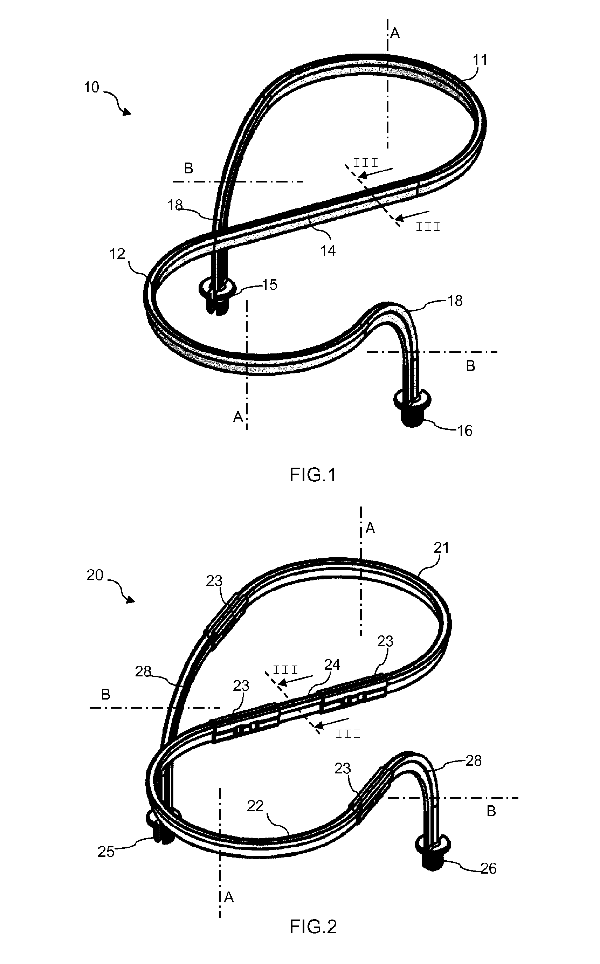

In FIG.1 ist eine vollständig aus einem Stück als Kunststoffteil hergestellte Leitungsführungseinrichtung allgemein mit 10 bezeichnet. Die Leitungsführungseinrichtung 10 umfasst als Hauptbestandteile ein erstes und ein zweites Bogenstück 11, 12, welche mit entgegengesetztem Bogenverlauf durch ein Linearstück 14 verbunden sind. Am anderen Endbereich jedes Bogenstücks 11, 12 ist jeweils ein Brückenstück 18 angeformt. An jedem Brückenstück 18 ist ein Anschlusselement 15, 16 einstückig angeformt, bspw. mit Außengewinde zum Verschrauben mit einem feststehenden Anschlusspunkt und einem hierzu relativbeweglichen Anschlusspunkt eines Pipettierautomaten (nicht gezeigt). Ebenfalls nicht näher gezeigt ist eine Kapillarleitung aus einem Schutzmantel und einem darin befindlichen Kapillarröhrchen, welches durch die Leitungsführungseinrichtung 10 geschützt ist.

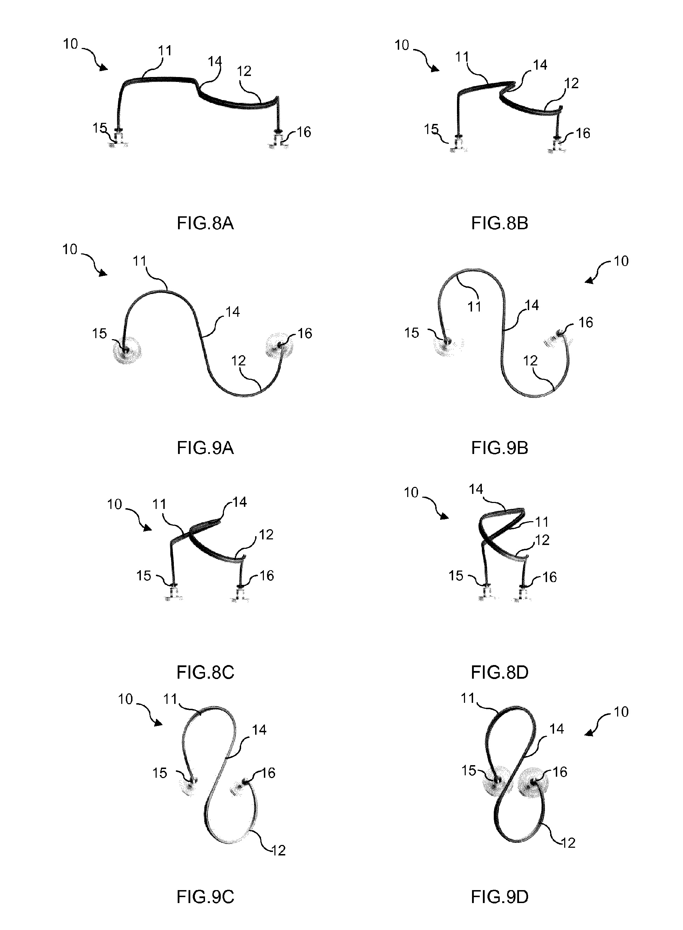

FIG.1 zeigt die Leitungsführungseinrichtung 10 im unbelasteten Zustand, d.h. das eine Anschlusselement 15 bzw. 16 befindet sich auf etwa der Hälfte des Verfahrweges relativ zum anderen Anschlusselement 16 bzw. 15. Jedes Bogenstück 11, 12 ist vorgekrümmt um eine vertikale Krümmungsachse A. Das Linearstück 14 ist geradlinig und in sich tordierbar, wie weiter unten im Zusammenhang mit FIG.8A-8D bzw. FIG.9A-9D erläutert. Der Verlauf der Leitungsführungseinrichtung 10 ist ein S-Kurvenverlauf Die um horizontale Achsen B gebogenen Brückenstücke 18, heben diesen S-Kurvenverlauf auf eine Ebene an, welche deutlich über der Bewegungsebene der Anschlusselemente 15, 16 bzw. Anschlusspunkte liegt.

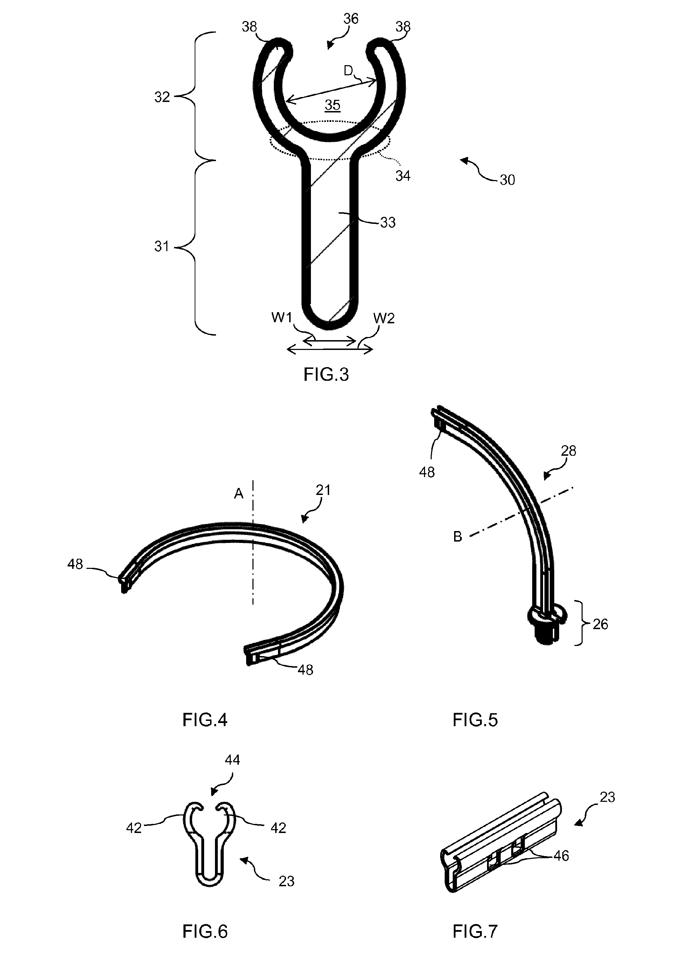

Die Leitungsführungseinrichtung 20 gemäß dem zweiten Ausführungsbeispiel in FIG.2 hat den gleichen Verlauf und ist nach dem gleichen Prinzip aufgebaut wie die Leitungsführungseinrichtung 10 nach FIG.1. Der einzige wesentliche Unterschied besteht darin, dass die Leitungsführungseinrichtung 20 nicht vollständig einstückig ist, sondern aus einer relativ geringen Anzahl einzelner, einstückiger Kunststoffteile zusammengesetzt ist, welche Längsabschnitte der Leitungsführungseinrichtung 20 bilden. Hierbei ist an jeweils einem von zwei identisch hergestellten Brückenstücken 28 (vgl. FIG.5) an dem angeformten Anschlusselement 25, 26 gegenüberliegenden Ende über gerade Verbindungsstücke 23 (FIG.6-7) jeweils eines der beiden Bogenstücke 21, 22 (FIG.4) befestigt. Die beiden Bogenstücke 21, 22, wiederum sind an ihrem anderen Ende über weitere Verbindungsstücke 23 zug- und torsionsfest mit dem mittleren Linearstück 24 verbunden. Natürlich kann mit diesem modularen System aus Bogenstücken 21, 22, Linearstücken 24, Brückenstücken 28 und Verbindungsstücken 23 auch ein anderer Verlauf, z.B. ein Doppel-S-Kurvenverlauf zusammengesetzt werden.

FIG.5 zeigt ein vorgekrümmtes Bogenstück 21, welches als einstückiges Kunststoffteil hergestellt ist. Das Bogenstück 21 hat ein Bogenmaß von etwa 210-230°, so dass auch bei größerem Krümmungsradius der Bogenstücke 21, 22 die beiden Anschlusselemente 26, 28 im unbelasteten Zustand recht nahe zusammenliegen (bzw. das Linearstück 24 verläuft wie eine Hypotenuse).

In FIG.6-7 ist auch der Aufbau des Verbindungsstücks 23 für das Baukastensystem näher gezeigt. Jedes Verbindungsstück 23 hat eine Innenkontur, welche formschlüssig die Außenkontur (FIG.3) der einzelnen Formteile 21, 22, 24 angepasst ist. Über die Öffnung 44 wird das Verbindungsstück 23 auf die zu verbindenden Einzelteile gespannt. Durch den Formschluss und auch die Halteklauen 42 wird die Torsion bzw. das Drehmoment insbesondere vom jeweiligen Bogenstück 21, 22 auf das anschließende Linearstück 24 übertragen. Zur Zugkraftübertragung sind an den Verbindungsstücken 23 auf beiden Seiten auf die Mitte zentriert zwei Rastlöcher 46 vorgesehen. Die Rastlöcher verrasten mit zwei gegenüberliegenden Rastnasen 48 an den Endbereichen der Bogenstücke 21, 22, Linearstücke 24 (nicht in FIG.4-7 gezeigt) oder Brückenstücke 28.

FIG.3 zeigt ein bevorzugtes Querschnittsprofil 30 für die Leitungsführungseinrichtungen 10 bzw. 20. Das Querschnittsprofil 30 hat einen ersten, unteren Bereich 31, welcher einen Trägersteg 33 zum Tragen von Gewichtslast bildet, d.h. mit seiner Haupterstreckung etwa vertikal verläuft (in unbelastetem Zustand). Oberhalb des ersten Bereichs 31, schließt ein zweiter Bereich 32 an, welcher eine Querschnittsverbreiterung 34, gestrichelt in FIG.3 hervorgehoben, bildet. Die Querschnittsverbreiterung 34 hat eine größere Querschnittsbreite W2 als die Querschnittsbreite W1 des ersten Bereichs 31. Die Querschnittsbreiten W1, W2 sind jeweils gemessen von Außenseite zu Außenseite des Querschnittsprofils 30. Der zweite Bereich 32 besteht aus der Querschnittsverbreiterung 34 und daran anschließenden, nach oben zulaufend gekrümmten Schnappleisten 38, mit gerundeten Enden. Die Schnappleisten 38 bilden eine Art Rohr-Schnappschelle mit einer Öffnung 36 zum Einlegen der Kapillarleitung am oberen, dem Trägersteg 33 vertikal gegenüberliegenden Ende. Somit bildet die Querschnittsverbreiterung 34 auch einen einstückigen Übergang zwischen dem ersten Bereich 31 und der Aufnahme 35. Der Trägersteg 33 steht, sofern insbesondere das Linearstück 14 bzw. 24 nicht in sich verdreht ist, vertikal.

Insgesamt zeigt FIG.3 somit ein etwa T-ähnliches oder Y-ähnliches Querschnittsprofil 30, wobei der zweite Bereich 32 einerseits die Aufnahme 35 für genau eine Leitung und mit der Querschnittsverbreiterung 34 andererseits zugleich eine Art Flansch bzw. Gurt für den Trägersteg 33 bildet. Die Aufnahme 35 hat einen kreisrunden Querschnitt und soll die Leitung (nicht gezeigt) mit Radialspiel aufnehmen. Typische Innendurchmesser für kleinere Leitungen betragen weniger als 20mm, teilweise weniger als 10mm. In der bevorzugten Ausführung gemäß FIG.3 ist die Maximalbreite W1 des ersten Bereichs 31 deutlich kleiner, als der Aufnahmedurchmesser D, mit W1 etwa gleich 0,6xD.

FIG.8A-8D veranschaulicht einen Bewegungsablauf anhand eines Prototypen einer vollständig einstückigen Leitungsführungseinrichtung 10 nach FIG.1. Ausgehend vom unbelasteten Zustand nach FIG.1 (FIG.8A/9A), wird das eine Anschlusselement 16 auf das andere Anschlusselement 15 zugefahren. So werden zunächst die Bogenstücke 11, 12 leicht zusammengestaucht, d.h. stärker gekrümmt (FIG.8B/9B). Hierbei beginnt bereits das in der Mitte zwischen den Bogenstücken 11, 12 befindliche Linearstück 14 leicht nach oben auszubrechen und wird hierbei auch bereits leicht in sich verdreht. Nähert sich das Anschlusselement 16 weiter dem anderen Anschlusselement 15, so heben sich die von den Anschlusselementen 15, 16 entfernten Enden der Bogenstücke 11, 12 unter Beibehaltung eines vorgegebenen Mindestkrümmungsradius der Leitungsführungseinrichtung 10 bzw. der Bogenstücke 11, 12 weiter nach oben an, wobei das Linearstück 14 entsprechend stärker tordiert wird (FIG.8C/9C). In der Endstellung nach FIG.8D bzw.

FIG.9D grenzen die Anschlusselemente 15, 16 fast aneinander, und die Verformung zwischen der Krümmungsposition aus FIG.8B wird im Wesentlichen ausschließlich durch die Torsion des Linearstücks 14 um seine eigene Achse aufgefangen.

### BEZUGSZEICHENLISTE

FIG.1
   - 10: Leitungsführungseinrichtung
   - 11: erstes Bogenstück
   - 12: zweites Bogenstück
   - 14: Linearstück
   - 15, 16: Anschlusselemente
   - 18: Brückenstück
   - A, B: Krümmungsachsen
FIG.2
   - 20: Leitungsführungseinrichtung
   - 21: erstes Bogenstück
   - 22: zweites Bogenstück
   - 23: Verbindungsstück
   - 24: Linearstück
   - 25, 26: Anschlusselemente
   - 28: Brückenstück
   - A, B: Krümmungsachsen
FIG.3
   - 30: Querschnittsprofil (gemäß Schnittlinien III-III)
   - 31: erster Bereich
   - 32: zweiter Bereich
   - 33: Trägersteg
   - 34: Querschnittsverbreiterung
   - 35: Aufnahme
   - 36: Öffnung
   - 38: Schnappleisten
   - D: Aufnahmedurchmesser
   - W1, W2: Querschnittsbreite
FIG.4-7
   - 21: Bogenstück
   - 23: Verbindungsstück
   - 28: Brückenstück
   - 42: Halteklauen
   - 44: Öffnung
   - 46: Rastlöcher
   - 48: Rastnasen
FIG.8A-8D, FIG.9A-9D
   - 10: Leitungsführungseinrichtung
   - 11, 12: Bogenstücke
   - 14: Linearstück
   - 15, 16: Anschlusselemente

## Patentansprüche

1. Leitungsführungseinrichtung (10; 20) zum geschützten Führen mindestens einer Leitung, wie zum Beispiel eines Kabels, eines Schlauchs oder dergleichen, insbesondere eines Kapillarröhrchens, zwischen einem feststehenden Anschlusspunkt und einem hierzu relativbeweglichen Anschlusspunkt, wobei die Leitungsführungseinrichtung in Längsabschnitten oder vollständig einstückig, vorzugsweise aus Kunststoff, hergestellt ist, ein erstes Anschlusselement (15; 25) für den einen Anschlusspunkt, ein zweites Anschlusselement (16; 26) für den anderen Anschlusspunkt und eine Aufnahme (35) für die mindestens eine Leitung umfasst, **dadurch gekennzeichnet, dass** die Leitungsführungseinrichtung ein Querschnittsprofil (30) mit einem ersten Bereich (31), welcher einen Trägersteg (33) zum Tragen von Gewichtslast bildet, und einem zweiten Bereich (32), welcher eine Verbreiterung (34) gegenüber dem ersten Bereich bildet, aufweist, und mindestens ein erstes vorgekrümmtes Bogenstück (11, 12; 21; 22), welches eine vorgegebene Krümmung um eine Krümmungsachse (A) aufweist, und mindestens ein daran anschließendes Linearstück (14; 24) umfasst, welches tordierbar ist.

2. Leitungsführungseinrichtung nach Anspruch 1, **dadurch gekennzeichnet, dass** diese ein zweites vorgekrümmtes Bogenstück (12; 22), welches eine vorgegebene Krümmung um eine Krümmungsachse (A) aufweist, wobei die Krümmungsrichtungen des ersten und zweiten Bogenstücks entgegengesetzt sind und das mindestens eine Linearstück (14; 24) zwischen den Bogenstücken angeordnet ist, wobei die Leitungsführungseinrichtung einen Verlauf ähnlich einem S-Kurvenverlauf aufweist.

3. Leitungsführungseinrichtung nach Anspruch 1 oder 2, **dadurch gekennzeichnet, dass** der zweite Bereich (32) die Aufnahme (35) bildet, vorzugsweise in der Art einer Rohr-Schnappschelle und/oder mit einer Öffnung (36) zum Einlegen der mindestens einen Leitung, welche vorzugsweise dem Trägersteg (33) gegenüberliegt.

4. Leitungsführungseinrichtung nach Anspruch 3, **dadurch gekennzeichnet, dass** die Verbreiterung (34) des zweiten Bereichs (32) einen einstückigen Übergang zwischen dem ersten Bereich (31) und der Aufnahme (35) bildet und eine Querschnittsbreite (W2) aufweist, welche größer ist, als die maximale Querschnittsbreite (W1) des ersten Bereichs.

5. Leitungsführungseinrichtung nach einem der Ansprüche 1 bis 4, **dadurch gekennzeichnet, dass** die Krümmungsachse (A) des mindestens einen Bogenstücks im Wesentlichen parallel zur Haupterstreckung des Trägerstegs (33) verläuft.

6. Leitungsführungseinrichtung nach einem der Ansprüche 1 bis 5, **dadurch gekennzeichnet, dass** die Leitungsführungseinrichtung (10; 20) ein T-ähnliches oder Y-ähnliches Querschnittsprofil (30) aufweist, wobei der flansch- bzw. gurtartige zweite Bereich (32) vorzugsweise die Aufnahme (35) für genau eine Leitung bildet.

7. Leitungsführungseinrichtung nach einem der Ansprüche 1 bis 6, **dadurch gekennzeichnet, dass** die Aufnahme (35) einen kreisrunden Querschnitt aufweist und die Leitung mit Radialspiel aufnimmt, wobei der Durchmesser der Aufnahme (35) insbesondere « 20mm, vorzugsweise < 10mm beträgt.

8. Leitungsführungseinrichtung nach einem der Ansprüche 1 bis 7, insbesondere nach Anspruch 7, **dadurch gekennzeichnet, dass** die Maximalbreite (W1) des ersten Bereichs (31) des Profilquerschnitts (30) kleiner ist, als der Aufnahmedurchmesser (D).

9. Leitungsführungseinrichtung nach einem der Ansprüche 1 bis 8, **dadurch gekennzeichnet, dass** das Bogenstück (21, 22) mit einem Bogenmaß >180°, insbesondere ≥ 200°, ausgebildet ist.

10. Leitungsführungseinrichtung nach einem der Ansprüche 1 bis 9, **dadurch gekennzeichnet, dass** die Krümmungsachse (A) jedes Bogenstücks (11, 12; 21, 22) etwa vertikal verläuft und der relativbewegliche Anschlusspunkt in einer etwa horizontalen Ebene gegenüber dem festen Anschlusspunkt verfahrbar ist.

11. Leitungsführungseinrichtung nach einem der Ansprüche 1 bis 10, **dadurch gekennzeichnet, dass** an jedes Anschlusselement (15, 16; 25, 26) anschließend jeweils ein vorgekrümmtes Brückenstück (18; 28) vorgesehen ist, mit einer Krümmungsachse (B) senkrecht zur Haupterstreckung des Trägerstegs (33).

12. Leitungsführungseinrichtung nach einem der Ansprüche 1 bis 11, **dadurch gekennzeichnet, dass** diese aus einzelnen, einstückig hergestellten Bogenstücken (21, 22) und Linearstücken (24) zusammengesetzt ist, welche mittels Verbindungsstücken (23) kraft- und-/oder formschlüssig, insbesondere torsionsübertragend, verbunden sind.

13. Leitungsführungseinrichtung nach einem der Ansprüche 1 bis 12, **dadurch gekennzeichnet, dass** das Material der Linearstücke (14; 24) hinreichend torsionselastisch ist, um ein Knicken zu vermeiden.

14. Verwendung einer Leitungsführungseinrichtung nach einem der Ansprüche 1 bis 13, zum Schutz genau einer Leitung mit Kapillarröhrchen, insbesondere in einem Analysegerät, oder genau einer Glasfaserleitung, insbesondere in einer Maschine mit Datenverarbeitung.

15. Anordnung umfassend eine Leitungsführungseinrichtung nach einem der Ansprüche 1 bis 14 sowie eine Leitung mit Kapillarröhrchen oder genau einem Lichtwellenleiter, welche in der Leitungsführungseinrichtung aufgenommen ist.
